# EUROPEAN PATENT APPLICATION

(11) **EP 2 062 931 A1**
(43) Date of publication of application: **27.05.2009**
(21) Application number: 07120832.6
(22) Date of filing: 16.11.2007
(51) Int. Cl.: C08J 5/04

(54) **Carbon Nanotube Reinforced Polymer**

(71) Applicant: Stichting Dutch Polymer Institute, 5612 AB Eindhoven (NL); Massachusetts Institute of Technology, Cambridge MA 02139-4307 (US)
(72) Inventor: Grossiord, Nadia, 5612 AB, Eindhoven (NL); Loos, Joachim, 5612 AB, Eindhoven (NL); Koning, Cornelis Eme, 5612 AB, Eindhoven (NL); Hart, Anastasios John, Ann Arbor, MI 48104 (US)
(74) Representative: DeltaPatents B.V.

(57) **Abstract**

The present invention relates to a process for the preparation of a carbon nanotube reinforced polymer by:
a) contacting carbon nanotubes under high shear in an aqueous medium with a water-soluble component, being either a water-soluble first polymer or a water-soluble surfactant;
b) mixing the resulting product from step a) with an aqueous latex of a second polymer;
c) removing water from the so obtained mixture;
d) heating the product from step c) to a temperature at which the second polymer flows; and
e) solidifying the product of step d) into a desired form;

characterized in that less than 50 wt.% of the carbon nanotubes degrades when heated to a temperature up to 600°C.

The present invention furthermore relates to carbon nanotube reinforced polymers, and the use of such carbon nanotube reinforced polymers.

## Description

The present invention relates to a process for the preparation of a carbon nanotube reinforced polymer, carbon nanotube reinforced polymers, and the use of such carbon nanotube reinforced polymers.

In recent years, much effort has been put into the incorporation of carbon nanotubes (CNT) into polymer matrices. The composites obtained are interesting materials, since they have enhanced electrical and mechanical properties at very low CNT loading due to the specific CNT characteristics, such as their high aspect ratio and electrical conductance. However, dispersion of CNTs into highly viscous polymers is difficult and has often been attempted by functionalizing the CNTs, leading to attractive interactions between the CNTs and the polymer. Moreover, functionalizing the CNTs lowers their conductivity.

In general, materials can be divided into three groups regarding their electrical conductivity δ: insulators (δ < 10⁻⁷ S/m), semi-conductors (δ = 10⁻⁷ - 10⁵ S/m) and conductors (δ > 10⁵ S/m). For intrinsically non-conductive polymers, typical conductivity values range from 10⁻¹⁵ S/m up to 10⁻¹² S/m. Carbon fillers can have conductivities in the range of 10⁴ S/m up to 10⁷ S/m. In composites, the conductivity levels off to a lower value than for the pure carbon species at higher filler concentration.

Carbon nanotube reinforced polymers are presently made by incorporating CNTs, into a polymer matrix. An example of such a process is described in WO-A-2004/072159, which discloses a process for the preparation of a reinforced carbon nanotube by:
a) contacting carbon nanotubes in an aqueous medium with a water-soluble component, comprising either a water-soluble first polymer or a water-soluble surfactant;
b) mixing the resulting product from step a) with an aqueous latex of a second polymer;
c) removing water from the so obtained mixture;
d) heating the product from step c) to a temperature at which the second polymer flows; and
e) processing and/or solidifying the product of step d) into a desired form.

The CNTs as-produced are generally clustered in the form of bundles. In the case of single wall CNTs this is due to strong van-der-Waals interactions between the CNTs, in the case of multi wall CNTs it is because they are highly entangled. In order to obtain (essentially) single CNTs, the CNTs as-produced can be exfoliated (in case of single wall CNTs) or disentangled (in case of multi wall CNTs), for example by means of ultrasonic treatment, or by a chemical modification process. In the following the term exfoliation will be used for both cases. After exfoliation, the dispersability of the individual CNTs in the polymer matrix is improved and a more homogeneous distribution of the CNTs in a polymer matrix can be obtained. The incorporation of CNTs into such a polymeric matrix is beneficial for the enhancement of the stiffness as well as the conductivity of the polymer matrix material.

A certain minimum amount of CNTs in(corporated) into the polymeric matrix is needed to have a significant change in the electrical conductivity of the composite material. This minimum amount is called the percolation threshold. From this point, the conductivity increases drastically upon very little further addition of CNTs. There are several advantages to having a low percolation threshold. Firstly, with a low percolation threshold, a lower amount of CNTs is needed. While CNTs are quite costly this is a clear advantage. Secondly, having a low percolation threshold can be favourable for the mechanical and flow properties of the reinforced polymers.

It is the object of the present invention to lower the percolation threshold, at the same time further improving the conductivity of CNT reinforced polymers.

This object is achieved by a process for the preparation of a carbon nanotube reinforced polymer by:
a) contacting carbon nanotubes under efficient mixing in an aqueous medium with a water-soluble component, being either a water-soluble first polymer or a water-soluble surfactant;
b) mixing the resulting product from step a) with an aqueous latex of a second polymer;
c) removing water from the so obtained mixture;
d) heating the product from step c) to a temperature at which the second polymer flows; and
e) solidifying the product of step d) into a desired form;
characterized in that less than 50 wt.% of the carbon nanotubes degrades when heated to a temperature up to 600°C.

The CNTs used in the present invention are thermally stable up to 600°C measured by thermogravimetry (TGA), meaning that less than 50 wt.% of the carbon nanotubes degrades when heated to a temperature up to 600°C. Preferably less than 80 wt.% of the carbon nanotubes degrades when heated to a temperature up to 600°C, more preferably less than 95 wt.% of the carbon nanotubes degrades when heated to a temperature up to 600°C. TGA is performed by heating a CNT sample from room temperature to a temperature of approximately 900°C and monitoring at which temperature the different compounds of the sample degrade.

Using such CNTs in the process of the present invention results in carbon nanotube composites with very high conductivity at relatively low CNT loading. Furthermore, the percolation threshold being low, less CNTs are needed for making the composite. This reduces the costs of the composite material.

In another embodiment of the invention the as-produced CNTs have a length between 1 and 10,000 µm. More preferably the CNTs have a length between 5 and 5,000 µm, even more preferably between 10 and 2,000 µm. The diameter of the CNTs used in the present invention is preferably between 0,5 and 100 nm (depending on whether single wall or multi wall CNTs are used), more preferably between 5 and 30 nm, even more preferably between 10 and 20 nm. A combination of different CNTs (with for example different lengths or diameters) can be used.

The CNTs used in the present invention can be single wall as well as multi wall carbon nanotubes. In one preferred embodiment of the present invention the CNTs are multi wall carbon nanotubes. Multi wall CNTs generally have a larger diameter and therefore can generally be longer. Also they are mechanically more stable.

In another preferred embodiment of the invention the CNTs as-produced initially formed vertically aligned films of small diameter multi wall carbon nanotubes. CNTs produced in such a way generally have monodisperse length and high purity.

The steps of the process of the present invention will be separately discussed below.

### Step a): Preparing a slurry from carbon nanotubes in an aqueous medium.

This method is described in WO-A-02/076888. In this publication a method is described for the exfoliation of CNTs, resulting in a stable aqueous product containing essentially single CNTs. In this publication a water-soluble polymeric material is used for obtaining the exfoliated nanotubes. The water-soluble polymeric material should preferably be of a hydrophilic nature, and can be either from natural or synthetic origin. Reference is also given to WO-A-2004/072159, which discloses that it can be advantageous to improve the incorporation of the water-soluble polymeric material, when its hydrophilic nature is to be improved, to add (e.g. in this step a)) an electrolyte, like a water-soluble salt, like sodium chloride. This improves the dispersability of the CNTs in the matrix of the carbon nanotubes reinforced polymer.

In step a) also a water-soluble surfactant can be used to effectively exfoliate the CNTs. Preference is given to a salt of a hydrocarbon sulphate or sulphonate, like sodiumdodecyl sulphate (SDS), sodiumdodecyl sulphonate, or sodiumdodecyl benzene sulphonate, or a polyalkyleneoxide based surfactant.

The process of the present step a) is performed by contacting the essential ingredients (the polymer or surfactant, and the carbon nanotubes) under efficient mixing in any order in water or an aqueous solution. The term efficient mixing in this respect means that an amount of mixing energy is applied to the extent that exfoliation of the (originally bundled) CNTs occurs. Efficient mixing can be applied for example by means of sonication (with ultrasound) or by high shear mixing. High shear mixing allows the CNT bundles to be finely split in the solution, as a result of which shorter sonication times are needed to obtain dispersion of exfoliated CNTs. Also other high shear generating techniques can be used. Such techniques are known by the man skilled in the art.

The resulting product can typically contain up to about 25 wt.% of carbon nanotubes, dispersed in an aquous solution of said first polymer or surfactant. Preferably, the resulting product contains up to 5 wt.% of carbon nanotubes, more preferably up to 2 wt.%. In this step a) the mass ratio of the first polymer or surfactant to the carbon nanotubes can range from 0.05 to 20. Preferably, the ratio is between 1 and 4, more preferably between 1 and 2.

The temperature at which this step a) is performed is not critical. Temperatures between room temperature and 75°C are very well suited. Other temperatures can also be used, the man skilled in the art will be able to determine a suitable temperature.

The residence time needed for an effective exfoliation of the carbon nanotubes can be easily determined by a man skilled in the art. Residence times below 1 hour have proven to be sufficient for that purpose, depending on the total input of the mixing energy (like ultrasonic energy). Grossiord et al. (Anal.Chem. 2005, 77, 5135-5139) describe a method that can be used to determine the maximum exfoliation with UV-Vis spectroscopy. This method is based on the principle that bundled CNTs, contrary to exfoliated (single) CNTs, are hardly active in the wavelength region between 200 and 1200 nm. Therefore, maximum achievable exfoliation corresponds to the maximum UV-Vis absorbance of the CNT solution. Samples of the CNT solution are taken at different times during the exfoliation process and the UV-Vis absorption spectra of these samples are recorded with a spectrometer operating between 200 and 1200 nm. The absorbance increases with higher exfoliation times until it levels off. The ultimate highest limit of the absorbance corresponds to the maximum achievable degree of exfoliation of the CNTs.

The CNTs may become shorter after the efficient mixing of step a), resulting in a lower aspect ratio L/D of the CNTs of the invention. The average length L of the CNTs after step a) may be lowered to about 2-3 µm, while at the same time the diameter of the CNTs is not affected by the mixing. After mixing the aspect ratio of the CNTs may be 300 and lower. Compared to other CNTs, generally having aspect ratios of 300 and higher, this is rather low. It is generally known that CNTs with a higher aspect ratio contribute more to high conductivities of CNT composites. It is therefore especially surprising that with such low aspect ratios of the CNTs in the final composite, such high conductivities can be obtained.

### Step b): The product resulting from step a) is brought into contact with an aqueous latex of a second polymer.

This second polymer is the polymer which will become, after performing the process steps of the invention, the matrix of the CNT reinforced polymer, in which the CNTs are well-dispersed. Also a polymer precursor can be used, which will form the second polymer when performing the subsequent process steps of the invention. Every aqueous polymer latex known to the skilled man can be used. Preference is given to a second polymer being selected from the group comprising polyacrylates, styrene-based (co-)polymers, butadiene-based (co-)polymers, polycarbonate, acrylonitrile-based (co-)polymers, (halogen-containing) polyolefins (like polyethylene or polypropylene, homo- as well as copolymers), polyamides, polyurethanes, polyvinylchlorides, and polymethacrylates. Even more preferred is the use of polystyrene, or a copolymer of an olefin or of styrene with either a (meth-)acrylate, maleic anhydride, a maleimide, a 2- or 4-vinylpyridine, acrylonitrile, or another vinyl or vinylidene type monomer as the second polymer.

The temperature of this mixing step b) generally lies between 10 and 150°C. The pressure is generally atmospheric, but may be increased in order to accommodate for processability in this step b) or in the following step c). The residence time for this step b) is not critical, and generally does not exceed 1 hour.

### Step c): Treating the mixture obtained in process step b), to remove (substantially all of the) water.

There are different physical methods available to the skilled man to achieve this removal of water. Out of these methods, a preference is given to performing step c) by means of evaporation, freeze-drying, or flash-drying.

### Step d): Preparation of a homogeneous dispersion of the CNTs in the second polymer.

In the case that the second polymer is a thermoplastic polymer, the temperature in this step d) is chosen such that it is 10-200°C above the melting point (in case of a (semi-) crystalline second polymer), or above the glass transition point (in case of an amorphous second polymer), but in any case below the degradation temperature of the second polymer.

In order to make a homogeneous blend of the different components pressure may also be applied. In case the polymer present in step b) of the process of the present invention has a higher molecular weight (Mw), like for example a Mw of more than 500.000 g/mol, or more than 1.000.000 g/mol, process step d) is preferably performed under a pressure between 1 and 40 MPa, more preferably under a pressure between 5 and 25 MPa. Alternatively, one can make use of other methods to obtain flow such as shear, or one can use polymers that are naturally inclined to flow at room temperature such as in case of polymer coatings, like for example polymers with a glass transition temperature below room temperature (e.g. polyisoprene, polybutadiene, etc.).

In all cases, the man skilled in the art is aware of the process conditions under which this step d) is to be performed, depending on the nature of the selected second, matrix forming polymer.

### Step e): The solidification of the product of step d) in a desired form.

This step e) can be a molding step, a pelletizing step, an extrusion step, an injection or compression molding step, or any known step to form a solidified polymer object.

In a preferred embodiment of the invention step d) and step e) are combined into one step. For example, the product resulting from step c) can be molten and poured into a mould, after which upon cooling the product is solidified in the desired form.

The process of the present invention results in a CNT reinforced polymer. The CNTs are essentially individually dispersed in the polymer matrix. The polymer therefore has improved mechanical and flow properties as well as better conductivity properties.

The invention also relates to a carbon nanotube reinforced polymer, obtainable by the process of the present invention. With the process of the present invention polymer composites are obtainable having a conductivity percolation threshold at or below 0.15 wt. % of CNTs giving a conductivity of 1 S/m or higher. Addition of more CNTs leads to unexpectedly high conductivities: in particular, the process of the present invention results in a polymer composite that has a conductivity of 200 S/m or higher at a CNT content of about 1 wt. % and a conductivity of 1000 S/m or higher at a CNT content of about 2 wt. %. In the art such a low percolation threshold and high conductivity hasn't been reported yet. Values reported elsewhere are of the order of a couple of S/m or lower most of the time, a few tens of S/m in the best cases. For example in J. Mater. Sci. 37, 2002, pages 319-23, a process is described for the preparation of a poly(styrene/butyl acrylate) copolymer nano composite using CNTs as filler. This process uses multiwall CNTs (MWNT), suspended in an aqueous solution of sodium dodecyl sulphate, and a latex of the copolymer. An amount of at least 3 wt.% of the MWNT is needed to have a significant change in the electrical conductivity of the nanocomposite. A conductivity level of about 3 S/m is reached. In Adv. Mater. 2004, 16, pages 150-153, polymer composites with single wall CNTs (SWNT) are described with a percolation thresholds below 1 wt.%, however with maximum conductivities only up to 17 S/m.

The carbon nanotube reinforced polymer of the present invention can be used for several applications in which the improved mechanical and conductivity properties can be exploited. Reference can be given to anti-static and/or shielding applications (like electromagnetic interference shielding); high modulus conducting body panels for the automotive industry with a better surface appearance than glass fiber filled polymers; nano-electric devices (such as thin-film transistors), and others.

The invention is illustrated by the following non-limiting Examples.

### Materials and techniques

### Chemicals

*Materials*: Styrene (99%) and Sodium Carbonate (Na₂CO3, 99%) were purchased from the Aldrich Chemical Co.; Sodium Dodecyl Sulfate (SDS, 90%) and Sodium Persulfate (SPS) were provided by the Merck Chemical Co. All experiments were carried out with demineralized water.

### Sample preparation

*MWNT growth*: The MWNTs used in the invention were produced by a process described by Hart and Slocum based on the atmospheric pressure thermal chemical vapor deposition of ethylene (C₂H₄) (Hart, A.J.; Slocum, A.H., J.Phys.Chem. B. 2006, 110, 8250-7). The growth substrate was a (100)-oriented silicon wafer (Silicon Quest International), which was first coated with approximately 500 nm thermally-grown SiO₂, and then coated with a supported catalyst film of 1/10 nm Fe/Al₂O₃ by e-beam evaporation. CNT growth was performed in a single-zone atmospheric pressure quartz tube furnace (Lindberg), having an inside diameter of 22 mm and a 30 cm long heating zone, using flows of He (99.999%, Airgas), C₂H₄ (99.5%, Airgas), and H₂ (99.999%, Airgas). The furnace temperature was ramped to the set point temperature (750 °C) in 15 minutes and held for an additional 10 minutes under 400/100 sccm (standard cubic -cm) H₂/He. Then 100 sccm C₂H₄ was added for the growth period of 15 minutes. Finally, the H₂ and C₂H₄ flows were discontinued and 600 sccm He was maintained for 10 more minutes to displace the reactant gases from the tube, before being reduced to a trickle while the furnace cools to below 150°C.
The CNTs produced this way initially formed vertically aligned films of small diameter MWNTs with a length of about 1 mm (measured by SEM). As characterized by High Resolution Transmission Electron Microscope (HRTEM), the CNTs were typically multiwalled with an average outer diameter of 10 nm.

The MWNTs of the present invention were characterized by TGA. As comparative example also a MWNT purchased from Nanocyl was characterized. The MWNT from Nanocyl has been annealed. Therefore, for better comparison, also the MWNTs of the invention were heated in an oven at 350°C (without vacuum) for 10 minutes.

*Thermogravimetry (TGA):* TGA experiments were performed on a TA Instrument Q5000 TGA under dry air flow (25mL/min). Typically 1 mg of CNTs was placed in a high temperature platinum crucible and heated from room temperature up to 900°C at a rate of 5°C/min.

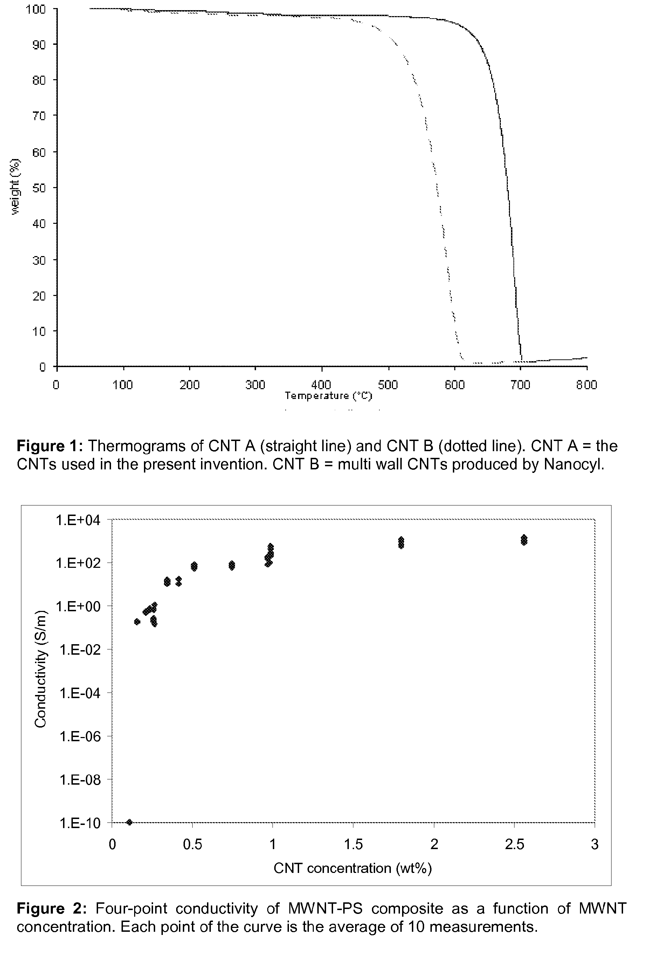

According to Figure 1, CNT A is of much better quality than CNT B since it degrades at a significantly higher temperature: at a temperature of 600°C only 4.2 wt.% of CNT A has degraded, whereas at the same temperature, 88.06 wt.% of CNT B has degraded.

### Emulsion polymerization

The emulsion polymerization runs were carried out in an oxygen free atmosphere. 252 g styrene was mixed with 712 g water in the presence of 26 g SDS surfactant and 0.7 g Na₂CO₃ buffer. The reaction was initiated by adding 0.7 g SPS dissolved in 5g of water. The polymerization took place at constant temperature of 50 °C. Batch emulsion polymerization experiments were performed in a glass stirred reactor equipped with four baffles and with external jackets for heating and cooling (allowed by circulation of water). A 45° pitched four-bladed Teflon impeller was used.

### Nanocomposite preparation

The CNT film adhered weakly to the substrate and could easily be removed as freestanding films from the catalyst coated silicon wafer by gently separating the films from the substrate using a razor blade.

0.04 wt.% of CNTs in water, still in the shape of films, were mixed with a 0.3 wt.% SDS solution in water. The mixture was first submitted to a step of vigorous stirring with Ultra-Turrax® at 24,000 rpm, followed by sonication under mild conditions (20W, 20kHz, room temperature, no additional stirring) The sonication was performed with a horn sonicator (Vibracell VC750) possessing a cylindrical tip (1 mm end cap diameter). The sonication was stopped when the maximum of exfoliation of the NTs was reached. This maximum was determined by a method based on UV-Vis spectroscopy. During the sonication of the CNT-SDS aqueous mixture, samples were taken regularly, diluted by a factor of 150, and UV spectra were recorded. Quartz cuvettes were employed and the blank used as reference for the measurements was a 0.3 wt.% SDS solution, diluted by a factor of 150, under the same conditions as the samples themselves. The debundling process of the CNTs during sonication results in an increase of the concentration of individual CNTs, which are active in the UV-Vis region (on the contrary to bundled CNTs that barely absorb). This finally leads to an increase of the UV-Vis signal recorded. In other words, a leveling off of the UV-Vis absorption, recorded as a function of time and/or the total ultrasonic energy supplied to the system, indicated that the maximum degree of exfoliation had been achieved, and that accordingly further energy input could be stopped in order to prevent unnecessary damaging of the CNTs.

High shear mixing with Ultra-Turrax® allowed the CNT 'films' to be finely split in the solution so that shorter sonication times were needed to obtain dispersion of exfoliated CNTs. The concentration of surfactant used was chosen high enough to ensure that all the NTs that could potentially be debundled were effectively individual at the end of this sonication-driven debundling process. The resulting CNTs had a typical length L of 2-3 µm. The diameter D of 10 nm being unchanged, the CNTs had a typical aspect ratio L/D of 200-300.

The CNT-SDS dispersion was then mixed with a polystyrene latex obtained by radical emulsion polymerization. The ratios CNT-SDS dispersion to polymer latex were dependent on the CNT concentration desired in the final nanocomposite.
Knowing that the CNT dispersion contains 0.04 wt.% of CNTs, and that the solid content of the latex is 27.9 wt.%, it was possible to retrospectively calculate the ratio of CNT-SDS dispersion to polymer latex. The resulting mixture was then freeze-dried (Chris Alpha 2-4) and the resulting powder degassed and processed into films by compression molding, twice at 180 °C/40 bars for 20 seconds, and once at 180 °C/100 bar for 2 min (Collin Press 300G).

### Characterization

Two-point conductivity measurements were performed using a Keithley 6512 Programmable Electrometer. Measurements were performed directly on the surface of the films. The contact between the sample and the measuring device was improved by the use of a colloidal graphite paste (Cat#12660) provided by Electron Microscopy Science. This conductive paste was used to improve the contact between the sample and the measuring device to reduce contact resistivity of the surface measurements. It was applied with a pen dipped in the conductive paste.

### Results

Measurements of the electrical conductivity of the nanocomposites made by the latex-based concept were performed for several CNT loadings. Figure 2 and Table 1 display the effect of the MWNT concentration on the volume conductivity of the final nanocomposite.

**Table 1: Average conductivity (S/m) of MWNT-PS composite at different MWNT concentration (wt.%).**

| **MWNT concentrations (wt.%)** | **Conductivity (S/m)** |
|---|---|
| 0 | 10⁻¹⁰ |
| 0.15 | 0.18 |
| 0.20 | 0.53 |
| 0.42 | 14.07 |
| 0.50 | 70.09 |
| 0.98 | 266.38 |
| 1.80 | 843.67 |
| 2.60 | 1040.19 |

## Claims

1. Process for the preparation of a carbon nanotube reinforced polymer by:
a) contacting carbon nanotubes under efficient mixing in an aqueous medium with a water-soluble component, being either a water-soluble first polymer or a water-soluble surfactant;
b) mixing the resulting product from step a) with an aqueous latex of a second polymer;
c) removing water from the so obtained mixture;
d) heating the product from step c) to a temperature at which the second polymer flows; and
e) solidifying the product of step d) into a desired form;
**characterized in that** less than 50 wt.% of the carbon nanotubes degrades when heated to a temperature up to 600°C.

2. Process according to claim 1, **characterized in that** less than 80 wt.% of the carbon nanotubes degrades when heated to a temperature up to 600°C.

3. Process according to claim 1, **characterized in that** less than 95 wt.% of the carbon nanotubes degrades when heated to a temperature up to 600°C.

4. Process according to anyone of claims 1-3, **characterized in that** the length of the carbon nanotubes is between 1 and 10,000 µm and the diameter is between 0,5 and 100 nm.

5. Process according to anyone of claims 1-4, **characterized in that** the length of the carbon nanotubes is between 5 and 5,000 µm.

6. Process according to anyone of claims 1-4, **characterized in that** the length of the carbon nanotubes is between 10 and 2,000 µm.

7. Process according to anyone of claims 1-6, **characterized in that** the diameter of the carbon nanotubes is between 5 and 30 nm.

8. Process according to anyone of claims 1-6, **characterized in that** the diameter of the carbon nanotubes is between 10 and 20 nm.

9. Process according to anyone of claims 1-8, **characterized in that** multi wall carbon nanotubes are used.

10. Process according to anyone of claims 1-9 **characterized in that** the carbon nanotubes as-produced initially formed vertically aligned films of small diameter multi wall carbon nanotubes.

11. Process according to anyone of claims 1-10, **characterized in that** step d) is performed under a pressure between 1 and 40 MPa.

12. Process according to anyone of claims 1-10, **characterized in that** step d) is perfomed under a pressure between 5 and 25 MPa.

13. Carbon nanotubes reinforced polymer, obtainable by a process according to anyone of claims 1-12.

14. Carbon nanotubes reinforced polymer having a percolation threshold at or below 0.15 wt.% of carbon nanotubes.

15. Carbon nanotubes reinforced polymer comprising between 2 and 5 wt.% of carbon nanotubes and having a conductivity of at least 1000 S/m.

16. Use of carbon nanotubes reinforced polymer according to anyone of claims 13-15 in anti-static and/or shielding applications, in automotive industry, or in nano-electric devices.
